# EUROPEAN PATENT APPLICATION

(11) **EP 2 369 470 A1**
(43) Date of publication of application: **28.09.2011**
(21) Application number: 10196334.6
(22) Date of filing: 21.12.2010
(51) Int. Cl.: G06F 9/44, G06F 3/048

(54) **Graphical user interfaces for devices that present media content**

(30) Priority: 15.02.2010 US 304695 P
(71) Applicant: RESEARCH IN MOTION LIMITED, Waterloo, Ontario N2L 3W8 (CA)
(72) Inventor: Langlois, Michael George, Kanata Ontario K2K 3K2 (CA); Patterson, Andrew Robert, Waterloo Ontario N2L 3L3 (CA); Hardy Michael Thomas, Waterloo Ontario N2L 3L3 (CA); Kumar Arun, Waterloo Ontario N2L 5Z5 (CA)
(74) Representative: Roberts, Gwilym Vaughan

(57) **Abstract**

Methods and devices are described pertaining to graphical user interfaces that enable users to manage and play their media content on a portable electronic device. For example, a method is described in which a first source icon associated with a first set of media selections is displayed and a second source icon associated with a second set of media selections is also displayed. In addition, a first function icon indicative of a first function is superimposed on the first source icon, and a second function icon indicative of a second function is superimposed on the second source icon. A selection input associated with either of the first source icon or the second source icon is received and the first function is executed when the selection input is associated with the first icon, and the second function is executed when the selection input is associated with the second icon.

## Description

### Cross-Related Applications

This application claims the benefit of U.S. Provisional Application No. 61/304,695, filed on February 15, 2010, which is incorporated herein by reference in its entirety.

### Technical Field

The present disclosure relates generally to user interfaces on a portable device, and in particular to user interfaces presented on a display of a device capable of presenting media content.

### Background

Some portable electronic devices, such as smart phones, can present media content to a user. Media content can include audio (such as music), videos (which may include audio components), still pictures, and combinations thereof. Media content in the form of audio can be presented to a user by playing the audio content through a speaker or a headphone, for example. Media content in the form of video or pictures can be presented to a user by displaying images on a display, with or without audio.

### Brief Description of the Drawings

FIG. 1 is a front view of an example of a portable electronic device with an illustrative graphic user interface.

FIG. 2 is an alternative graphic user interface.

FIG. 3 is a flow diagram illustrating a method carried out by a portable electronic device.

FIG. 4 is another flow diagram illustrating a method carried out by a portable electronic device.

FIG. 5 is a block diagram illustrating a portable electronic device in accordance with the present disclosure.

FIG. 6 is an alternative implementation of a graphic user interface where the text associated with the song currently playing has been selected.

### Detailed Description

Many portable electronic devices typically include memory that enables the device to store significant amounts of media content. The more media content that gets stored on the device, the more advantageous it can be to store the media content in ways that make the media content more accessible to the user of the portable electronic device. It may be also be advantageous to implement a user interface by which a user can browse through the media content stored on the device. It may be particularly advantageous for the user interface to be intuitive.

As will be discussed in more detail below, a portable electronic device may include one or more interfaces by which a user may make a selection. When the device receives the user's selection input via the interface, the device may execute one or more functions in response to the selection input. Physical components by which a selection input may be received include, but are not limited to, buttons, keys, trackballs, touch pads and touch screens. The user interface may be accompanied by one or more visual aspects presented upon a display, such as a highlight, menu, button, dialog box, icon and the like.

The description that follows will describe the concepts in connection with a touch screen. The concepts are not restricted to a touch screen, however, and may be adapted to a variety of portable electronic devices that lack a touch screen. Further, the description that follows will describe the concepts in connection with various visual aspects and indicators, but the concepts are not necessarily limited to the particular visual elements described.

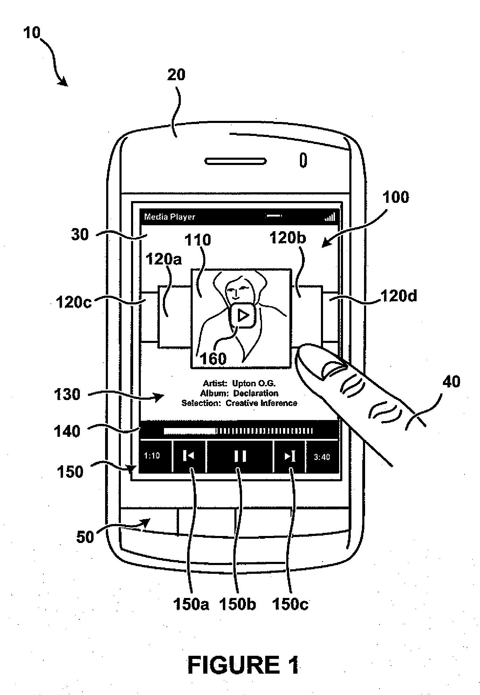

Figure 1 shows a front view of an example of a portable electronic device 10. The portable electronic device 10 includes a housing 20 that houses internal components. The housing 20 frames a touch-sensitive display 30 such that the touch-sensitive display 30 is exposed for user interaction therewith when the portable electronic device 10 is in use. As will be described below, the touch-sensitive display 30 may display or render any suitable number of user-selectable features, such as virtual buttons, keys or selectable icons. The portable electronic device 10 is depicted in Figure 1 in a portrait orientation, in which the user 40 holds the device 10 so that the display 30 is taller than it is wide. The concepts described herein can be implemented on a portable electronic device having a display of any shape or orientation,

The touch-sensitive display 30 may be any kind of touch-sensitive display, such as a capacitive, resistive, infrared, surface acoustic wave touch-sensitive display, strain gauge, optical imaging, dispersive signal technology, acoustic pulse recognition, contactless touch screens that detect finger movements and so forth. One or more touches by the user 40 - also known as touch events - may be detected by the touch-sensitive display 30. It is important to note that a touch or touch event is not necessarily limited to a physical touch, as in the case of contactless touch screens. In such a case, a user's finger or some other suitable object may be moved in front of (but not in contact with) a contactless touch screen, which can recognize the movement of the finger or object for purposes of executing some function based on the recognized movement. A "touch event" is defmed as an action directed towards a touch-sensitive display that causes a corresponding execution of a function on the display and includes both actual physical contact and a contactless action in which there is no direct physical contact with the touch-sensitive display.

A processor in the housing 20 may determine attributes of a touch, including a location of the touch. Touch location data may include an area of contact or a single point of contact, such as a point at or near a centre of the area of contact. The location of a detected touch may include x and y components, e.g., horizontal and vertical components, respectively, with respect to a view by the user 40 of the touch-sensitive display 30. For example, the x location component may be determined by a signal generated from one touch sensor, and the y location component may be determined by a signal generated from another touch sensor. A touch may be detected from any suitable object, such as a finger, thumb, appendage, or other items, for example, a stylus, pen, or other pointer depending on the nature of the touch-sensitive display 30. Multiple simultaneous touches may be detected.

In some implementations, the display 30 may provide tactile feedback. One or more actuators (not shown), such as spring-loaded switches or piezoelectric actuators, may be depressed by applying force to the touch-sensitive display 30. Pressing the display 30 may be electronically detectable and may be one technique by which the user 40 may make a selection (that is, one technique by which a selection input may be received). The display 30 may also be electronically driven to provide tactile feedback to the user 40. Audio feedback also may be provided, to indicate to the user 40 that he or she has depressed (or "clicked") or otherwise activated the display 30.

In addition to presses and touches, the touch-sensitive display 30 may be configured to detect moving touches, including contactless movements. As an example, the user 40 may touch the screen 30 with his or her finger and slide the finger along the screen. For purposes of this description, any moving or static touch events represent ways by which a user may make a selection.

In the embodiment shown in Figure 1, the portable electronic device 10 also includes one or more physical buttons 50, by which the user 40 may make a selection. For ease of description, the concepts will be described in terms of the various touch events.

Figure 1 shows an exemplary graphical user interface 100 displayed on the display 30. The graphical user interface 100 depicts an interface for use with media content. For simplicity of explanation, the media content will be described as music audio tracks. The concepts may be adapted to, however, media content of other types, including video, still pictures, speeches, audio blogs or other audio recordings. The portable electronic device 10 may output the audio via any speaker, headphone or other audio interface (which may not be shown explicitly in Figure 1).

Conventional marketing of music has typically involved sale of a collection of musical selections as a group (conventionally known as an "album"). A user may desire to hear one or more musical selections (for example, one or more songs) from the album. The graphical user interface 100 supports easy browsing of collections of albums and songs.

In one implementation, the graphical user interface 100 depicts the albums as icons. As used herein, icons that represent the source for the media content being presented will be called "source icons." As shown in Figure 1, one source icon 110 is prominent (in this case, larger and appearing to be closer to the user 40) and other source icons 120 are less prominent. As shown in Figure 1, other source icons 120a and 120b are more prominent than source icons 120c and 120d. In a typical implementation, the source icons 110, 120 represent the albums, and may be represented by the artwork associated with the album. As shown in Figure 1, text 130 may be rendered proximate to the prominent icon 110 indicating information such as the name of the artist, the genre, the album title, the song being played, songs on the album and their playing time and so on. In another implementation, the source icons may represent individual audio tracks or other audio, video or multimedia content.

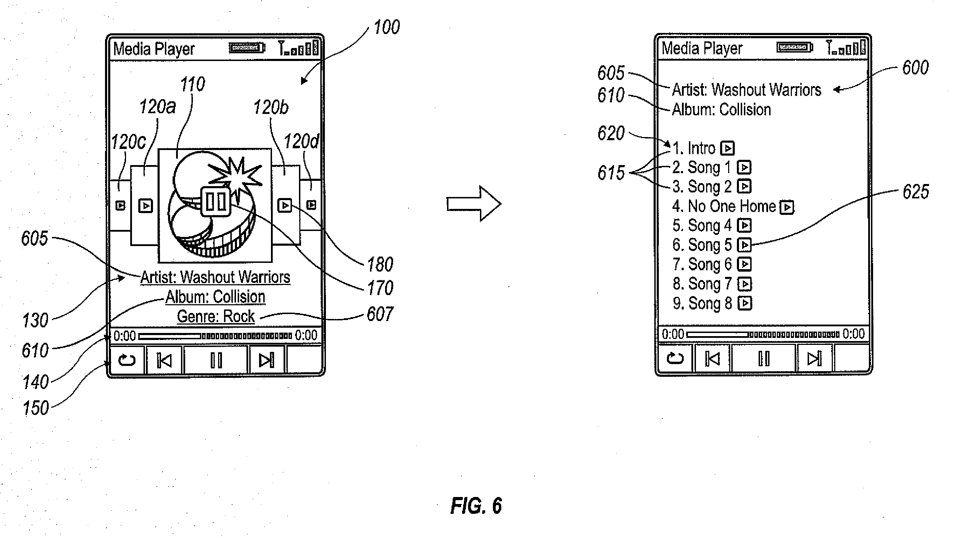

As an option, if the source icon represents an album or some other collection of audio, video or multimedia recordings, the graphical user interface 100 may include additional menus, pop-ups, lists or other interfaces by which a user may select a particular song or other recording from a selected album or collection. An exemplary implementation will be described in relation to Figure 6 below. These menus, pop-ups, lists or other interfaces can be displayed for a prominent source icon, for non-prominent source icons, or both.

As noted previously, a source icon 110 may be displayed in a prominent position. "Prominent" may mean, but does not necessarily mean, that the source icon is larger or appears closer, or that it appears in the center of the display 30. Displaying a source icon 110 in a prominent position may include any techniques for setting the source icon apart from other source icons that may be appearing on the display 30. The prominent position may have a unique color, for example, or be higher on the screen, be accompanied by a visual effect or have a larger size as compared to non-prominent source icons. For example, the source icon displayed in a prominent position may appear normally, while other source icons appear slightly blurred, or in black and white. The prominent position typically gives the source icon in the prominent position an indication (usually but not necessarily always a unique indication) of being somehow special and apart from the other source icons.

The graphical user interface 100 may include any number of indicators or controls. By way of example, Figure 1 depicts a slider bar 140 that may indicate volume or progress through the song. Figure 1 also depicts a control panel 150 having other indicators and virtual buttons that can be selected by a touch event. Selection of button 150a, for example, may cause the audio output to change from the song being currently played to a song that precedes it on the album, and selection of button 150c may cause the audio output to change from the song being currently played to a song that follows it on the album. Selection of button 150b may cause the song being currently played to pause. Other functions may be executed from the control panel, such as a shuffle function or functions associated with the display of video, including fast-forward or slow-motion buttons.

In the implementation depicted in Figure 1, the user 40 can change which source icon 110, 120 is prominent by sliding a finger across the display 30. When the user 40 slides the fmger to the right, for example, source icon 110 becomes less prominent (taking the position of icon 120b), and source icon 120a becomes more prominent, taking the place of source icon 110. In another implementation, the user 40 may touch the prominent source icon 110, which causes the prominent source icon 110 to drop back into a non-prominent position in the collection of source icons 120. This touching also includes a contactless point or a slide across the display 30 by the user. The user 40 may then cause the non-prominent source icons 120 to scroll across the display 30 by sliding a finger across the display 30. When the user 40 locates another source icon 120 to make prominent, the user 40 may simply touch or point at the desired source icon 120. At this point, the non-prominent source icon 120 becomes a prominent source icon 110. This process maybe repeated, if desired.

As shown in Figure 1, prominent source icon 110 has superimposed upon it a function icon 160. As shown in Figure 1, superimposed function icon 160 is effectively opaque. In another implementation, superimposing the function icon 160 includes presentation of a function icon 160 that is partially transparent, such that the underlying icon 110 could be perceived as being "seen through" the function icon 160. The location of the function icon 160 (roughly in the center of source icon 110), and the shape and general appearance of the function icon 160 are illustrative. The concepts described herein are not restricted to a command icon having any particular shape, size, position or appearance.

In Figure 1, the function icon 160 includes the rightward-pointing triangle that is a typical symbol meaning "Play." Other examples of functional icons include the double vertical bar symbol that means "Pause" or a looped arrow symbol that may mean "Repeat." The concepts described herein are not limited to any particular function icons. Moreover, the concepts described herein do not exclude the possibility that one or more function icons may include words, abbreviations or letters.

In Figure 1, only the prominent source icon 110 includes a superimposed function icon 160. As will be discussed below, however, the concept includes embodiments in which other source icons 120 may include superimposed command icons, even when those icons 120 are not in the prominent position of icon 110.

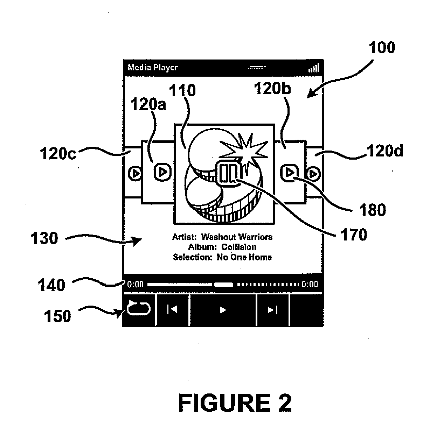

Figure 2 shows a variation of the graphical user interface 100. In Figure 2, variations of slider bar 140 and control panel 150 are depicted. In Figure 2, each source icon 110, 120 includes a function icon. The function icon 170 superimposed on prominent source icon 110 represents "Pause" and the function icon 180 superimposed on source icon 120b (and on other source icons as well) represents "Play." In this situation, a selection associated with source icon 110 may be playing. For purposes of simplicity, it will be assumed that the user wishes to decide whether to play selections from the album represented by source icon 110 or source icon 120b, or whether to pause the playback of the song currently playing.

A user may make the selection by selecting the source icon 110, 120 that displays the function that is of interest. For example, if the user wishes to pause the playback of the song currently playing, the song being associated with the source icon 110, the user may select source icon 110. If the user wants to play a selection from the album represented by source icon 120b, the user may select source icon 120c. As used herein, receiving a selection of a source icon includes selection of the source icon itself, or the function icon superimposed thereon, or both.

As explained earlier, the graphical user interface 100 may include additional menus, pop-ups, lists or other interfaces by which a user may select a particular song from a selected album. The concepts described herein can function with such interfaces. For example, in at least on implementation illustrated in Figure 6, the text 130 proximate to the prominent icon 110 can be user-selectable. When the text 130 is selected, a context specific second user interface 600 can be displayed that is related to the selected text. For example, in Figure 6, each of the artist 605, the genre 607, and the album title 610 of the text 130 can be user-selectable. As illustrated in Figure 6, the text identifying the album 610 of song being currently played has be selected, and a second user interface 600, such as a list, a menu, a pop-up, or other user interface can be displayed that presents a list 620 of the songs 615 from the selected album 610. The second user interface 600 can replace the first graphical user interface 100, as illustrated in Figure 6, or can be displayed on top of, adjacent to, or overlaid on the first graphical user interface 100. As illustrated in Figure 6, a playback icon 625 can be presented adjacent to one or each of the songs 615 presented in the list 620. The playback icon 625 can be selected to play the associated song in the media player. While Figure 6 illustrates each song having an associated playback icon 625, those of ordinary skill in the art will appreciate that fewer or less than each of the songs 615 illustrated can have an associated playback icon 625 including none of the songs 615 having an associated playback icon 625.

In another implementation, the text identifying the artist 605 of the song being currently played can be selected, and a second user interface 600 can be displayed that presents all albums associated with the selected artist 605. In yet another implementation, the text identifying the genre 607 of the song being currently played can be selected, and a second user interface 600 can be displayed that presents other albums 610, artists 605, and/or songs 615 having the same genre as that associated with the song being currently played.

In either of the above-described implementations where the text 130 can be selected, the information presented in the second user interface 600 displayed when the text 130 is user-selected can be limited to the songs and albums stored and available on a memory of the portable electronic device 10. In alternative implementations, the second user interface 600 can include songs and albums stored and available on an external memory coupled to the portable electronic device 10, songs and albums available for purchase through a third-party provider (for example, a cellular network service provider or an internet music service provider), songs and albums stored on and available from another portable electronic device connected to the same network as the portable electronic device 10, or any other source which the portable electronic device 10 can access. The second user interface 600 associated with the user-selectable text 130 can provide the user with relevant information pertaining to the currently playing song, thereby enhancing the user's media experience and allowing the user to tailor his or her media experience to his or her current mood or taste in media. For example, providing additional information in response to selecting the text 130 rendered proximate to the prominent icon 110 efficiently informs the user of other albums and songs the user has stored on his or her portable electronic device 10. Additionally, providing selectable text 130 allows for enhanced and tailored navigation and management of media files stored on the portable electronic device 10.

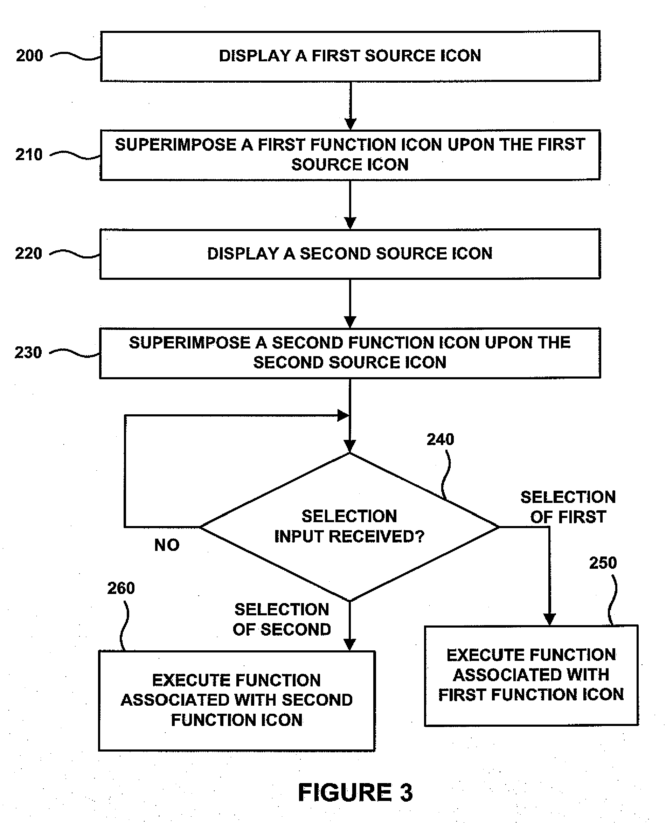

Figure 3 is a flow diagram illustrating an implementation of some of the concepts of this disclosure. A device such as portable electronic device 10 displays a first source icon (200) and superimposes a first function icon on the first source icon (210). The first source icon may represent, for example, an album from which a song is currently being played, and first function icon may represent "Pause." The portable electronic device 10 also displays a second source icon (220) and superimposes a second function icon on the second source icon (230). Although the first and second function items may be the same, the concept may be illustrated by a second function icon that represents "Play." In other words, the function icons are indicative of functions that the user may wish the portable electronic device 10 to execute.

The device 10 receives the selection input associated with the first source icon or the second source icon (240). In the above example, the user may make a selection associated with the first source icon if the user wants the song currently playing to pause. The user may make a selection associated with the second source icon if the user wants the song currently playing to discontinue and a song on a different album to play. When the device 10 receives a selection input associated with the first source icon, the device 10 executes the function associated with the first function icon (250). When the device 10 receives a selection input associated with the second source icon, the device 10 executes the function associated with the second function icon (260).

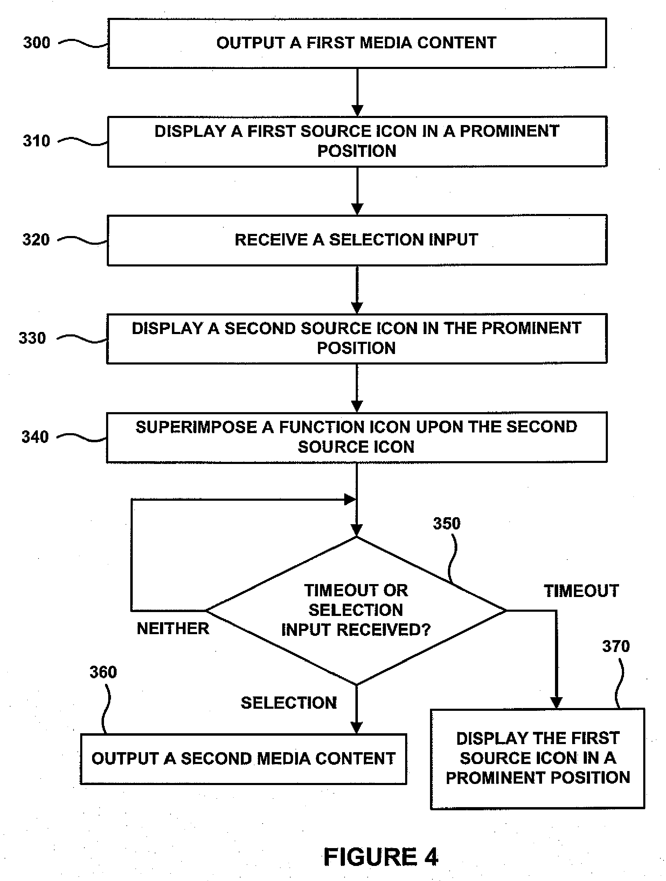

Figure 4 is a flow diagram illustrating an implementation of some additional aspects of this disclosure. As noted above, one implementation of the concepts includes displaying two or more source icons, with one of the source icons being more prominent and the other being less prominent. A user may change which icon is prominent by an input selection, such as by sliding a finger across the display 30. The implementation shown in Figure 4 assumes that a first media content (such as a song) associated with a first set of media selections (such as an album) is being output (300). In a typical audio implementation, the portable electronic device 10 may be playing a song, and the prominent source icon in the prominent position represents the album from which the song came. The device 10 may also display a first function icon superimposed on the first source icon (310).

In response to a selection input (320) such as a finger slide, the device may display a second source icon in the prominent position (330) and may superimpose a second function icon on the second source icon (340). The first source icon may be made less prominent, or may disappear off the display partially or entirely.

The user may have four basic options. One option is to continue to change which source icon is prominent (320). For example, by changing which source icon is prominent (320), the user can see what songs or albums have been played or will be played. Also, when changing which source icon is prominent (320), text 130 rendered proximate to the prominent source icon 110 can dynamically change thereby providing the relevant information associated with the current prominent source icon 110. A second option is to select (350) the second media content associated with the source icon that currently is prominent. Upon receiving such a selection input, the device 10 outputs second media content associated with the second source icon (360). A third option is to select (350) second media content associated with a source icon that currently is not prominent, and the effect is similar to selection of second media content associated with a source icon that is prominent (360).

The fourth option is to do nothing. When no selection inputs are received, the device 10 may start a timer. The timer may reset if any selection input is received. After a time interval, the device 10 generates a timeout, in which case the first source icon returns automatically to the prominent position (370). The length of the time interval is arbitrary and may in some implementations be set by the user. A typical timeout time interval may be five seconds, for example. If the user browses through the other sets of media selections, thereby moving the source icon associated with the currently-playing media selection out of the prominent position, and then does nothing for five seconds (for example), the source icon associated with the currently-playing media selection automatically moves back to the prominent position with no further input required from the user.

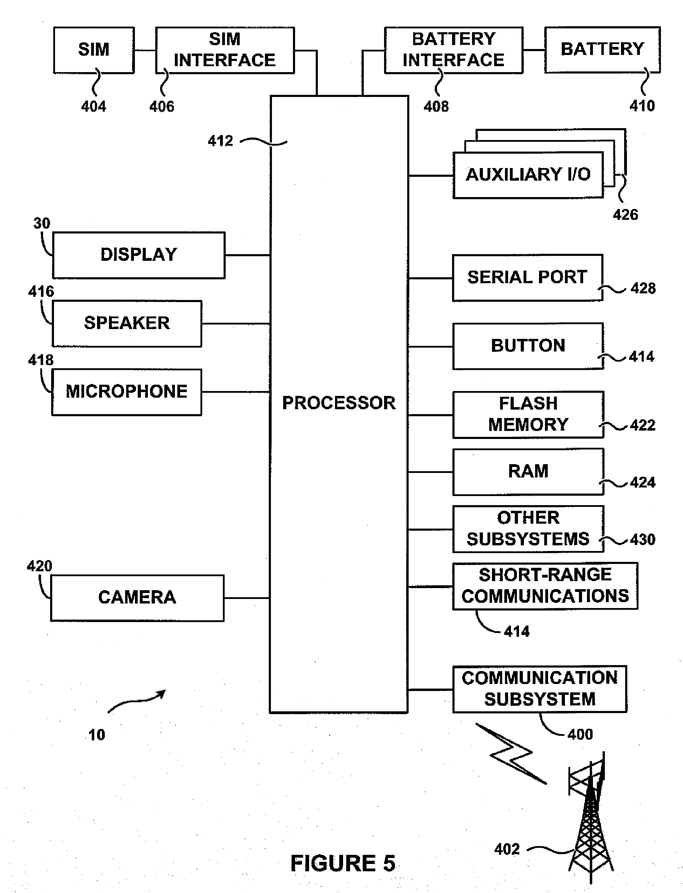

Figure 5 shows a block diagram illustrating some of the components of the portable electronic device 10. In the implementation depicted in Figure 5, the portable electronic device 10 is a two-way mobile communication device for data and voice communication, and includes a communication subsystem 400 to communicate wirelessly with a communications network 402. Communication subsystem 400 may include one or more receivers, transmitters, antennas, signal processors and other components associated with wireless communications. The particular design of the communication subsystem 400 depends on the network in which the portable electronic device 10 is intended to operate. The concepts herein may be applicable to a variety of portable electronic devices, such as data messaging devices, two-way pagers, cellular telephones with or without data messaging capabilities, wireless Internet appliances, data communication devices with or without telephony capabilities, a clamshell device, a slider phone, a touch screen phone or a flip-phone. The concepts described herein are not limited to devices having communications capability, however, and may be applied to portable electronic devices such as portable media players that are not enabled for communications.

In the embodiment shown in Figure 5, network access is associated with a subscriber or user of the portable electronic device 10 via a memory module 404, which may be a Subscriber Identity Module (SIM) card for use in a GSM network or a Universal Subscriber Identity Module (USIM) card for use in a Universal Mobile Telecommunication System (UMTS). The SIM card is inserted in or connected to an interface 406 of the portable electronic device 10 to operate in conjunction with a wireless network. Alternatively, the portable electronic device 10 may have an integrated identity module for use with systems such as Code Division Multiple Access (CDMA) systems.

The portable electronic device 10 also includes a battery interface 408 for receiving one or more rechargeable batteries 410. The battery 410 provides electrical power to at least some of the electrical circuitry in the portable electronic device 10, and the battery interface 408 provides a mechanical and electrical connection for the battery 410. The concepts described herein are not restricted, however, to any particular power supply.

The portable electronic device 10 includes a processor 412, which controls the overall operation of the portable electronic device 10. Processor 412 may be configured to carry out one of more of the operations described herein, including rendering on display 30 any of the graphical user interfaces 100, or processing selection inputs or measuring a time interval for a timeout or any of the operations described in Figures 3 and 4. For example, the processor 412 is operable to receive a selection input through the display 30 that is associated with either of a first source icon or a second source icon. In addition, the processor 412 is operable to execute a first function when the selection input is associated with the first source icon and execute a second function when the selection input is associated with the second source icon. Although depicted as a single element, the processor 412 may be implemented as discrete components.

Communication functions, including at least data and voice communications, are performed through the communication subsystem 400, under the regulation of the processor 412. The processor 412 also interacts with additional device subsystems such as the display 30, any buttons 414 or keypad, a secondary display (not shown), one or more speakers 416, a microphone 418, a camera 420, and the like. The camera 420, which is optional, may cooperate with the processor 412 to take still photographs, videos or both.

The processor 412 also interacts with flash memory 422, a random access memory (RAM) 424, auxiliary input/output (I/O) subsystems 426, a data port such as serial port 428, and any other device subsystems generally designated as 430. The processor 412 may further interact with other components, which for simplicity are not shown in Figure 5.

The processor 412, in addition to its operating system functions, enables execution of software applications on the portable electronic device 10. Software, which may include operating system software or application software, may be stored in flash memory 422, RAM 424 or any other memory element. Media selections may be stored in any memory element, as may source icons associated with those media selections. Further, software may be stored on the portable electronic device 10 in the memory elements to (for example) render the graphical user interfaces, instruct the processor 412 to carry out methods illustrated in Figures 3 and 4, and present the various forms of media content.

A set of applications that control basic device operations, including data and voice communication applications, will normally be installed on the portable electronic device 10 during or after manufacture. The portable electronic device 10 may include a personal information manager (PIM) application having the ability to organize and manage data items relating to a user such as, but not limited to, instant messaging, email, calendar events, voice mails, appointments, and task items.

The portable electronic device 10 may include one or more circuit boards (not shown) that implement the components described above. This disclosure is not limited to any particular electronic component or software module or any combination thereof.

As has been noted previously, the concepts described herein are not limited to audio media content. A set of media selections may include a collection of videos or scenes from a movie, for example. As another example, a set of media selections may include elements of mixed media, such as some videos (having both audio and video components) mixed with some audio selections (having no video components). A set of media selections may have a single element of media content associated with it.

One of ordinary skill in the art will appreciate that the features in each of the figures described herein can be combined with one another and arranged to achieve the described benefits of the presently disclosed graphical user interface for devices that present media content. Additionally, one of ordinary skill will appreciate that the elements and features from the illustrated implementations herein can be optionally included to achieve the described benefits of the presently disclosed graphical user interface for devices that present media content. Various modifications to and departures from the disclosed implementations will occur to those having skill in the art. The above embodiments are for illustration, and although one or more particular embodiments of the device and method have been described herein, changes and modifications may be made thereto without departing from the disclosure in its broadest aspects and as set forth in the following claims.

## Claims

1. A method for presenting media content, said method comprising:
displaying (200) a first source icon (110) associated with a first set of media selections;
displaying (220) a second source icon (120b) associated with a second set of media selections;
superimposing (210) a first function icon (170) indicative of a first function on the first source icon;
superimposing (230) a second function icon (180) indicative of a second function on the second source icon (120b);
receiving a selection input (240) associated with either of the first source icon (110) or the second source icon (120b); and
executing (260) the first function when the selection input is associated with the first source icon (110) and executing (250) the second function when the selection input is associated with the second source icon (120b).

2. The method according to claim 1, wherein the first source icon (110) is a prominent source icon.

3. The method according to claim 2, wherein the second source icon (120b) is a non-prominent icon and is one of at least partially blurred and black and white.

4. The method according to any one of claims 2-3, further comprising moving (330) the second source icon (120b) to the prominent source icon in the event the selection input is associated with the second source icon (120b).

5. The method according to claim 4, wherein the selection input is a selection of the second function icon (180).

6. The method according to any one of claims 2-5, wherein in the event no selection input is received during a time interval, displaying (370) the first source icon (110) in the prominent position.

7. The method according to any one of the preceding claims, wherein the first set of media selections (610, 615) and the second set of media selections include audio content, video content or a combination of both.

8. The method according to any one of the preceding claims, further comprising displaying a menu (600) that is associated with the second source icon (120b) and wherein the menu contains a listing of content that is associated with the second source icon (120b).

9. The method according to any one of the preceding claims, further comprising displaying a menu (600) that is associated with the first source icon (110) and wherein the menu contains a listing of content that is associated with the first source icon (110).

10. The method according to any one of the preceding claims, wherein the second function (180) is one of a play function, a pause function, and a repeat function.

11. The method according to any one of the preceding claims, further comprising displaying a control panel (150) comprising user-selectable virtual buttons.

12. The method according to any one of the preceding claims, further comprising outputting (360) a second media content in response to the receipt of the selection input (320).

13. The method according to claim 12, further comprising, in response to outputting (360) the second media, moving (330) the second source icon (120b) to the prominent position.

14. The method according to any one of claims 12-13, wherein the receipt of the selection input (320) comprises selecting the second function icon (180).

15. A portable electronic device (20), comprising:
a touch display (30) that displays a first source icon (110) associated with a first set of media selections and a second source icon (120b) associated with a second set of media selections, wherein the touch display (30) also detects touch events and superimposes a first function icon (160) indicative of a first function on the first source icon (110) and superimposes a second function icon (180) indicative of a second function on the second source icon (120b); and
a processor (412) coupled to the touch display (30), wherein the processor (412) is operable to execute the method as recited in any one of claims 1-14.
